# EUROPEAN PATENT APPLICATION

(11) **EP 1 801 361 A1**
(43) Date of publication of application: **27.06.2007**
(21) Application number: 06255950.5
(22) Date of filing: 21.11.2006
(51) Int. Cl.: F01D 25/24, F01D 11/08

(54) **Fan or compressor casing**

(30) Priority: 22.12.2005 GB 0526011
(71) Applicant: Rolls-Royce plc, London SW1E 6AT (GB)
(72) Inventor: Collins, Larry, Caldicot Monmouthshire, NP26 4QB (GB)
(74) Representative: Bird, Vivian John

(57) **Abstract**

The surge margin of a fan or compressor stage may be increased by radial, circular grooves in the casing (2) encircling the rotor stage. The present invention provides improved aerodynamic performance by replacing circumferential grooves by multiple helical grooves 18. Preferably the grooves (18) have multiple start and end positions (20,22) spaced apart around the casing (2) and at least the downstream ends (22) of the grooves (18) are tapered to aid expulsion of particles in the grooves (18).

## Description

The invention relates to a fan or compressor casing and more particularly to a modified fan or compressor casing for having improved surge margin performance.

The invention may be utilised in a fan section at the front of a gas turbine engine, or in an axial flow compressor section of the engine, or in an independent rotary fan arrangement for example of the kind used as a lift fan for a vertical / short take off aircraft. Such arrangements have in common a rotary stage enclosed within a generally cylindrical casing. The aerodynamic performance of such arrangements and the phenomenon of surge are well understood. It is known to increase their surge margin by adopting certain modifications to the casing wall in the vicinity of the rotary stage that allow limited re-circulation of air over the tips of the blades.

One such modification for improving the surge margin of a rotary stage of this kind uses a number of circumferential grooves formed in the casing wall. In operation, as the stage rotates a certain amount of air passing through the stage is spilled from the blade tips into the grooves and can travel around the groove according to pressure distribution therein. The drawback in such an arrangement is that foreign objects are also centrifuged into the grooves and can accumulate therein leading to impaired performance of the modification. This is undesirable as it leads inevitably to a reduction of the available surge margin in the rotary stage.

The present invention solves the above-mentioned drawback by avoiding the accumulation of foreign objects in the aforementioned tip treatment grooves.

According to the present invention a gas turbine engine driven fan or compressor stage casing comprising a generally cylindrical casing portion encircling a fan or compressor rotor having a multiplicity of blades spaced apart around the rotor, the casing portion having formed in its inner surface over the tips of the blades at least one helical groove characterised in that the at least one helical groove has a gradually reducing depth in the downstream direction.

In one form of the invention the at least one helical groove extends for a plurality of turns around the inner surface of the casing, and in addition to the depth of groove or grooves being tapered towards the downstream direction, the grooved portion may also extend beyond the trailing edges of the rotor blades. The groove or grooves may also be tapered towards the forward end and the grooved portion may extend ahead of the leading edges of the rotor blades.

The invention will now be described by way of example only with reference to the accompanying drawings, in which:
Figure 1 shows a section through part of a known axial flow compressor fan casing incorporating a known surge margin treatment and a blade tip portion of an associated rotary fan;
Figure 2 shows a corresponding view through an axial flow compressor fan casing provided with a surge margin treatment in accordance with the present invention;
Figure 3 shows a surge margin treatment according to the present invention in which the treatment grooves taper at their upstream and downstream ends; and
Figure 4 shows a surge margin treatment similar to that of Figure 3 un which the treatment grooves extend beyond the leading and trailing edges of the blades.

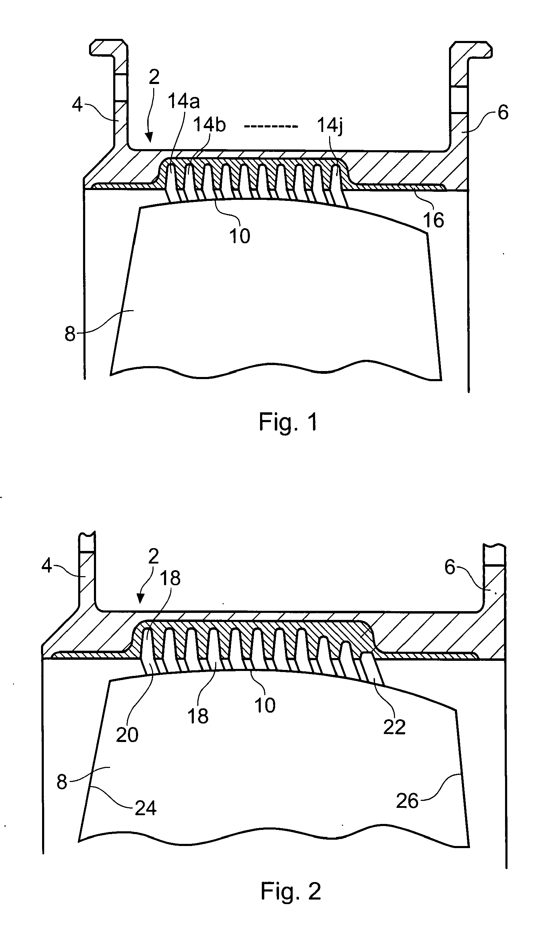

Referring to Figure 1 there is shown a generally cylindrical portion 2 of an axial flow compressor fan casing, in this case the fan casing forms part of lift fan arrangement for a V/STOL aircraft but it could equally form part of the intake to a gas turbine propulsion engine. At either end the casing 2 incorporates integral annular flanges 4,6 by means of which the casing may be attached to adjacent lift fan or engine sections in axial flow series as appropriate. A tip portion of a blade forming part of an associated rotary fan is shown at 8 to illustrate the close spacing between the two parts. The radially outer tip surfaces 10 of the blades 8 are positioned close to the inner surface 12 of the casing 2. In operation, the exact size of the tip clearance gap varies with rotor speed mainly due to elongation of the blade radius as a result mainly of the effect of centrifugal forces and blade untwist.

Under certain operating conditions the compressor, or fan, working line may be forced beyond the stability line leading to a surge. The stage is designed such that in normal operating range a surge margin is maintained between the working and stability lines sufficient to avoid surge. The situations that produce surge and the transient operating conditions during a surge event are well known, and it is not intended to analyse the several possible types of surge in depth here. However, to summarise briefly, during a surge event, the inlet mass flow of the rotary stage stalls or varies with time as the flow rate oscillates and may even become negative. Certain design steps may be taken to avoid or alleviate the conditions that give rise to a stall. One such step involves the design of the casing wall in the vicinity of the blade tips.

It is known to modify the compressor casing wall to increase the surge margin, as illustrated in Figure 1 by providing a plurality of substantially radial, circular grooves 14a, 14b ...14j in the surface 12 of cylindrical wall 2 in the vicinity of the blade tips 10. Fluid pressure in these grooves 14 a-j tends to follow pressure at the blade tips 10 so that local variations around the stage circumference, as occur under stall conditions, result in circumferential fluid flow in some at least of the grooves 14a-j and has the effect of evening out pressure variations or filling-in localised low-pressure regions.

The possibility of stall conditions occurring in the axial flow through the compressor is therefore reduced thus increasing the surge margin. For ease of construction and the possibility of repair by replacement the grooves 14a-j are cut into a demountable, liner section 16 secured in a cut-out formed in the inner surface 12 of the casing section 2. The liner section 16 may be made from different material compared to the remainder of the casing 2. It may be made in a number of segments and secured to the casing by appropriate means.

However, such an arrangement suffers from a drawback in that foreign objects of size equal to or smaller than the width of the grooves 14 may become trapped in the grooves. Air borne foreign objects will inevitably enter the air flow through the fan or compressor stage, it is simply impractical to try to exclude them without severely impeding the intake fluid flow. A proportion of these objects will be thrown into the tip treatment grooves 14a-j and will become trapped, unable to escape until the rotor has stopped or nearly stopped. Some may even become permanently trapped. A sufficient quantity of trapped particles will reduce the efficiency of the grooves and may abrade the blade tips 10 thereby reducing stage efficiency.

In the improvements illustrated in the accompanying drawings, like parts carry like references. Referring first to Figure 2 the circular grooves 14a-j of the prior art (Figure 1) are replaced by at least one or a single helical groove 18 cut into the liner section 16. The helix or helical groove 18 is handed to suit the direction of rotation of the rotor and blades 8. Air entrained in the groove and foreign particles are forced to travel along the helix from their point of entry and are expelled at the end of the groove. The direction of the helix may be chosen so that particles are transported either upstream or downstream relative to their entry point into the groove.

There may be a plurality of such helical grooves 18 arranged to commence at a like number of different points 20 spaced apart around the circumference of the casing. In the case of a single helical groove 18 particles or foreign objects will tend to be expelled from the groove in one circumferential position, basically at the downstream end 22 of the groove but factors such as orientation may be an influence. It is considered undesirable to concentrate potentially abrasive particles in one position as it could result in increased localised abrasion of components downstream of the ejection point against which the debris is incident. Therefore it is preferred to employ a plurality of helical grooves 18 in the liner 16. Each of these helical grooves has the same number of turns and is of the same length, and the start points 20 or upstream ends are equidistantly spaced apart around the circumference of the liner 16. The exit or downstream points 22 are correspondingly spaced apart around the circumference of the liner surface 16. Thus the helix exit points 22 are not concentrated at one location on the circumference and localised abrasion is reduced. Furthermore it is preferred that the termination of each groove 18 is such that foreign particles are deflected away from adjacent, downstream components.

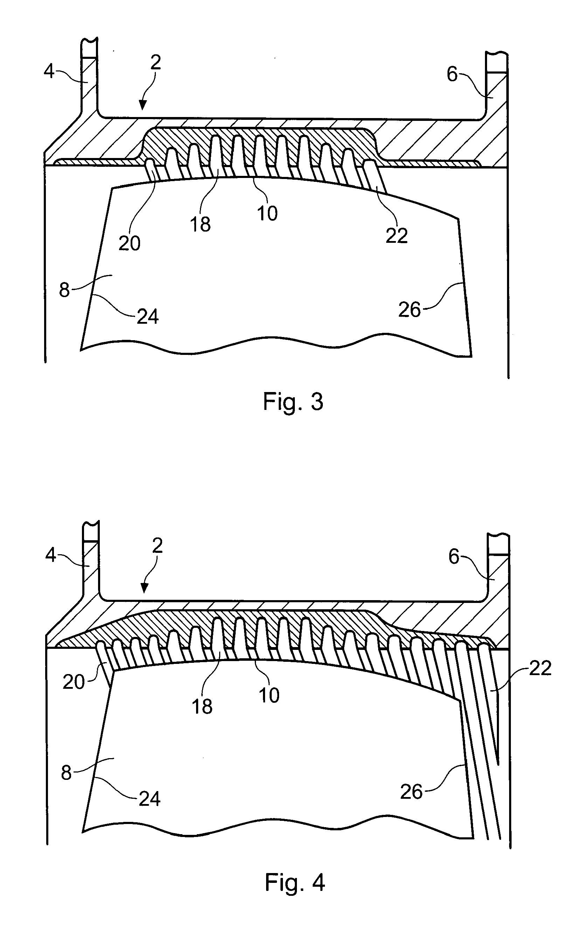

Also it is preferred that the depth of the helical grooves 18 is progressively reduced towards the chosen exit point 22 at least to reduce the chance that particles may become trapped at an abrupt end as in the prior art. It is envisaged that normally, that is in most cases only the depth of a portion of a helical grove 18 towards the downstream end 22 would be formed with a progressively reducing depth, as illustrated in Figure 2. However, the upstream ends 20 of the or each helix or helical groove 18 may be tapered in similar fashion, that is the helical groove 18 may be formed with a progressively decreasing depth in an upstream direction, as illustrated in Figure 3.

Multiple helical grooves 18 are more efficient at expelling particles, as the pitch of each helix 18 increases in proportion to the number of grooves, and less abrasion takes place. With less abrasion, or erosion, an optimum design geometry is maintained for a longer period so that the level of aerodynamic performance is preserved for a longer period of time compared to the existing prior art arrangement.

The grooves 18 serve a dual purpose. In addition to the grooves 18 functioning to collect and transport through the stage ingested foreign object particles, their primary function is to provide a re-circulation path in the vicinity of the tips of the rotor blades 8 to increase the stability and surge margin of the rotor stage in known fashion. Therefore, as is well known in that particular art the start 20 of the re-circulation grooves 18 may extend upstream of the leading edges 24 of the blades 8, and the exit 22 of the grooves 18 may extend downstream of the trailing edges 26 of the blades 8, as illustrated in Figure 4 of the drawings.

## Claims

1. A gas turbine engine driven fan or compressor stage casing comprising a generally cylindrical casing portion (2) encircling a fan or compressor rotor having a multiplicity of blades (8) spaced apart around the rotor, the casing portion (2) having formed in its inner surface over the tips (10) of the blades (8) at least one helical groove (18) **characterised in that** the at least one helical groove (18) has a gradually reducing depth in the downstream direction.

2. A casing for a fan or compressor stage as claimed in claim 1 **characterised in that** the at least one helical groove (18) extends for a plurality of turns around the inner surface of the casing (2).

3. A casing for a fan or compressor stage as claimed in claim 1 or claim 2 **characterised in that** the casing (2) and the at least one helical groove (18) extends downstream of the trailing edge (26) of the tips of the blades (8).

4. A casing for a fan or compressor stage as claimed in claim 3 **characterised in that** the at least one helical groove (18) has a gradually reducing depth in the upstream direction.

5. A casing for a fan or compressor stage as claimed in claim 4 **characterised in that** the at least one helical groove (18) extends upstream of the leading edge (24) of the blades (8).
